# EUROPEAN PATENT APPLICATION

(11) **EP 1 724 537 A1**
(43) Date of publication of application: **22.11.2006**
(21) Application number: 06009831.6
(22) Date of filing: 12.05.2006
(51) Int. Cl.: F25B 43/02

(54) **Oil separator and air conditioner having the same**

(30) Priority: 16.05.2005 KR 20050040906
(71) Applicant: LG Electronics Inc., Yongdungpo-gu Seoul (KR)
(72) Inventor: Kim, Hyung-Soo, Guro-Gu Seoul (KR); Choi, Jae-Heuk, Dongjak-Gu Seoul (KR); Choi, Song, Gangnam-Gu Seoul (KR); Chung, Baik-Young, Gyeyang-Gu Incheon (KR); Ko, Cheol-Soo, Gunpo Gyeonggi-Do (KR); Chang, Se-Dong, Gwangmyeong Gyeonggi-Do (KR)
(74) Representative: Vossius & Partner

(57) **Abstract**

Provided are an oil separator (125) and an air conditioner having the same, the oil separator comprising an oil separating unit (126,128,129) having an oil separating space in which oil is separated from an oil-contained refrigerant, a discharge pipe (L1) of which one end is connected to a compressor and the other end is connected to the oil separating unit so as to guide the oil-contained refrigerant discharged from the compressor to the oil separating unit, and a droplet forming unit (127) disposed in the discharge pipe (L1) to thus allow at least a part of oil particles contained in the refrigerant passing through the discharge pipe to be introduced into the oil separating unit in a state of an oil droplet, whereby at least a part of oil particles contained in the refrigerant passing through the discharge pipe can be introduced into the oil separating unit in a state of an oil droplet, thereby improving an oil separating performance of the oil separating unit by reducing a burden on separating oil of the oil separating unit, shortening an oil separating time of the oil separating unit, miniaturizing the oil separating unit, and improving an entire performance of the air conditioner by being equipped with the oil separator which includes characteristics mentioned above.

## Description

The present invention relates to an air conditioner, and particularly, to an oil separator which is miniaturized and has an improved oil separating function and an air conditioner having the same.

In general, an oil separator denotes a device for separating oil contained in a refrigerant which is discharged from a compressor to an condenser and then feedbacking the separated oil into the compressor.

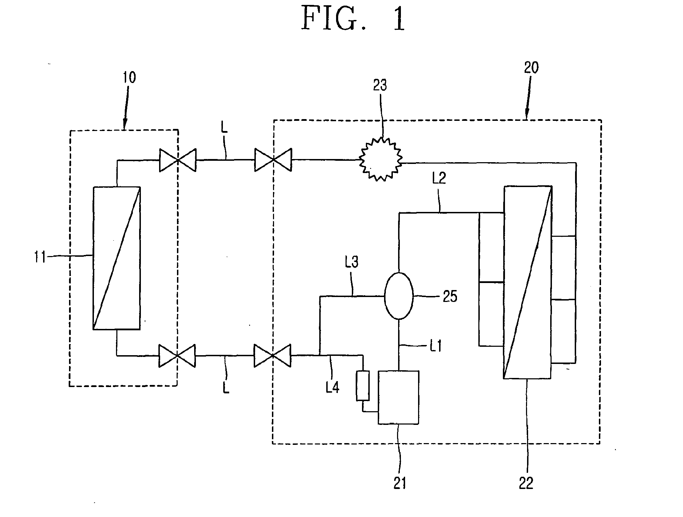

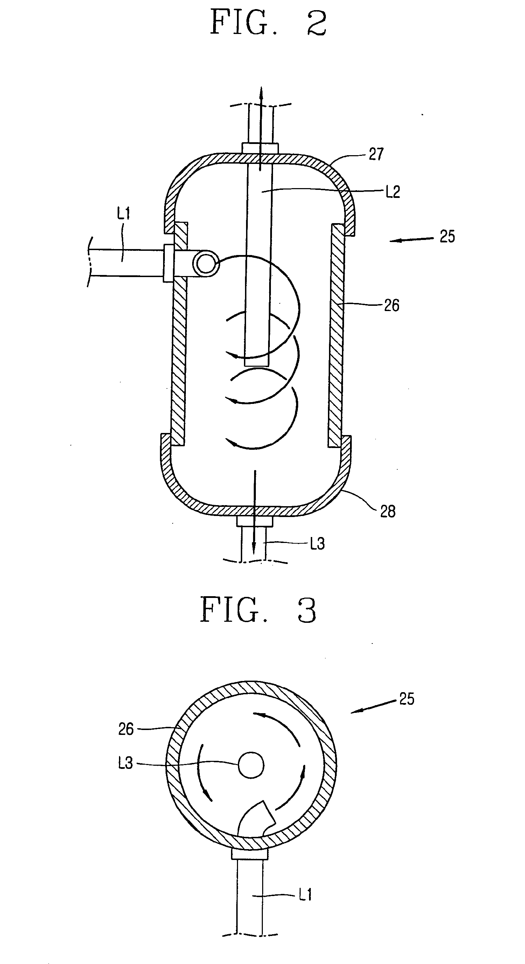

An air conditioner having an oil separator will now be explained with reference to Figs. 1 through 3. Fig. 1 is a schematic view showing an air conditioner having a related art oil separator, Fig. 2 is a horizontal sectional view of the oil separator of Fig. 1, and Fig. 3 is a longitudinal sectional view of the oil separator of Fig. 1. Here, arrows denote a flow of an oil-contained refrigerant which flows into an oil separator 25.

As shown in Fig. 1, an air conditioner is provided with an indoor unit 10 and an outdoor unit 20 which are connected to each other via a refrigerant pipe L. The indoor unit 10 is provided with an evaporator 11. The outdoor unit 20 is provided with a compressor 21, an oil separator 25, a condenser 22, an expansion valve 23, and the like.

The oil separator 25 is disposed between the compressor 21 and the condenser 22 to separate oil contained in the refrigerant which is discharged from the compressor 21 to the condenser 22 and then to feedback the separated oil into the compressor 21.

As shown in Figs. 1 through 3, the oil separator 25 includes a cylindrical shell 26 having an oil separating space, an upper cover 27 for covering an upper side of the shell 26, a lower cover 28 for covering a lower side of the shell 26, and a discharge pipe L1 formed through a side surface of the shell 26.

A circulation pipe L2 connected to the condenser 22 is penetratingly formed at the center portion of the upper cover 27, and an oil recollection pipe L3 connected to an oil suction pipe L4 is penetratingly formed at the center portion of the lower cover 28.

The discharge pipe L1 penetrates the side surface of the shell 26 in a horizontal direction, and an end of the discharge pipe L1 is curved toward an inner wall surface of the shell 26, whereby a maximum centrifugal force can be applied to the oil-contained refrigerant which flows into the shell 26.

Hereinafter, explanation will now be made for a procedure for separating oil from a refrigerant in the oil separator 25 having such configuration.

A refrigerant containing oil particles in an aerosol state, the refrigerant being discharged from the compressor 21, flows (is introduced) into the shell 26 via the discharge pipe L1 in a horizontal direction.

The refrigerant containing the oil particles which has been introduced into the shell 26 then rotates in a state of being in contact with an inner wall surface of the shell 26 by the centrifugal force. At this time, the oil particles contained in the refrigerant collide with one another to thusly form oil droplets.

The thusly-formed oil droplets are introduced back into the compressor via the oil recollection pipe L3 and the oil suction pipe L4. The refrigerant separated from the oil flows into the condenser via the circulation pipe L2.

However, in the related art oil separator 25, the oil could be separated by the centrifugal force only in the shell 26, and accordingly it was problematical to unsatisfactorily separate the oil from the refrigerant.

Moreover, in order to ensure an oil separating function, the refrigerant introduced into the shell 26 had to be contacted with the inner wall surface of the shell 26 with an area more than a certain degree. Also, the shell 26 had to have a greater radius so that the centrifugal force could greatly be applied to the refrigerant introduced into the shell 26.

The increases of the contact area and the radius caused an increase of height of the shell 26, which made it difficult to fabricate the oil separator 25 with a smaller size.

In order to solve those problems, on the other side, when using a shell 26 having a great height and radius, it took a longer time to separate the oil from the refrigerant which caused a delay of an oil supply time from the oil separator 25 to the compressor 21, resulting in a lack of oil within the compressor 21, thereby possibly breaking down the compressor 21.

Therefore, a first object of the present invention is to provide an oil separator having an improved oil separating function.

A second object of the present invention is to provide a miniaturized oil separator.

A third object of the present invention is to provide an oil separator which takes a shorter time to separate an oil.

A fourth object of the present invention is to provide an air conditioner including an oil separator which has the above mentioned characteristics.

To achieve these and other advantages and in accordance with the purpose of the present invention, as embodied and broadly described herein, there is provided an oil separator comprising: an oil separating unit having an oil separating space in which an oil is separated from an oil-contained refrigerant; a discharge pipe of which one end is connected to a compressor and the other end is connected to the oil separating unit so as to guide the oil-contained refrigerant discharged from the compressor to the oil separating unit; and a droplet forming unit disposed in the discharge pipe to thus allow at least a part of oil particles contained in the refrigerant passing through the discharge pipe to be introduced into the oil separating unit in a state of an oil droplet.

To achieve these and other advantages and in accordance with the purpose of the present invention, there is provided an air conditioner comprising: an indoor unit having an evaporator; an outdoor unit connected to the indoor unit via a refrigerant pipe and having a compressor and a condenser; an oil separator which includes an oil separating unit having an oil separating space in which an oil is separated from an oil-contained refrigerant, a discharge pipe of which one end is connected to the compressor and the other end is connected to the oil separating unit so as to guide the oil-contained refrigerant discharged from the compressor to the oil separating unit, and a droplet forming unit disposed in the discharge pipe to thus allow an at least part of oil particles contained in the refrigerant passing through the discharge pipe to be introduced into the oil separating unit in a state of an oil droplet; a circulation pipe .for guiding the refrigerant separated from the oil-contained refrigerant in the oil separator to the condenser; and an oil recollection pipe for guiding the oil separated from the oil-contained refrigerant in the oil separator to the compressor.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a schematic view showing an air conditioner having a related art oil separator;
Fig. 2 is a longitudinal sectional view of the oil separator of Fig. 1;
Fig. 3 is a horizontal sectional view of the oil separator of Fig. 1;
Fig. 4 is a longitudinal sectional view showing an oil separator in accordance with an embodiment of the present invention;
Fig. 5 is a view showing a discharge pipe of the oil separator of Fig. 4 and a droplet forming unit disposed at an inner surface of the discharge pipe;
Fig. 6 is a view showing an exemplary modification of the droplet forming unit of Fig. 5;
Fig. 7 is a view showing another exemplary modification of the droplet forming unit of Fig. 5; and
Figs. 8A through 8D are views showing sequential steps of an oil separating process by use of the oil separator of Fig. 4.

Description will now be given in detail of the present invention, with reference to the accompanying drawings.

Hereinafter, explanations will now be give for an oil separator in accordance with an embodiment of the present invention and an air conditioner having the oil separator with reference to the attached drawings.

For the sake of reference, an entire system of an air conditioner having indoor unit and outdoor unit and components other than an oil separator are the same as those in the related art air conditioner as shown in Figs. 1 through 3, and thus the explanation therefor will be omitted in order to obviously describe purposes and features of the present invention.

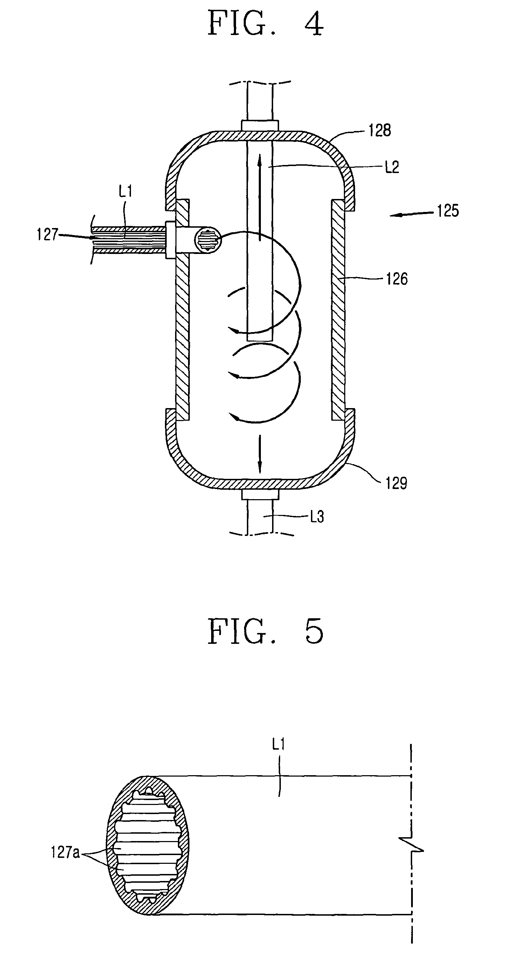

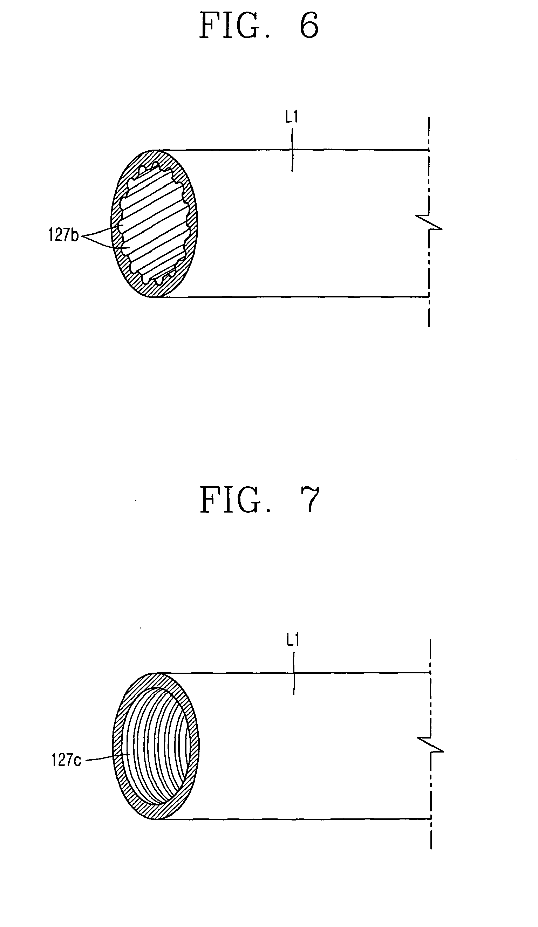

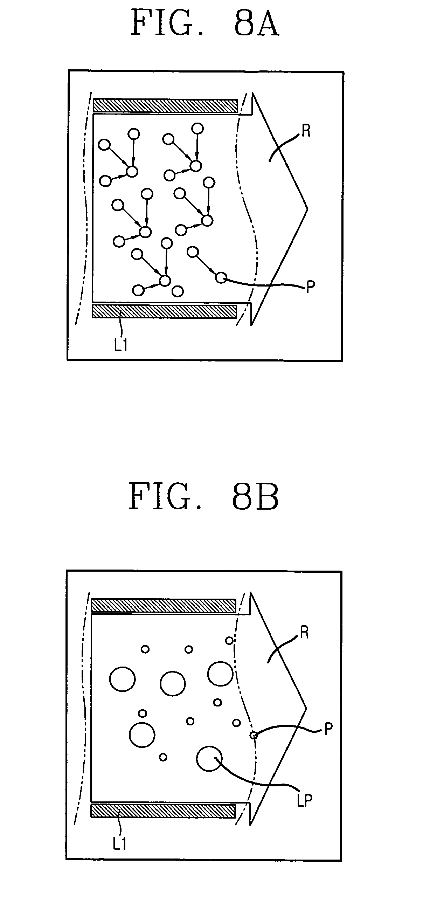

Fig. 4 is a longitudinal sectional view showing an oil separator in accordance with an embodiment of the present invention, Fig. 5 is a view showing a discharge pipe of the oil separator of Fig. 4 and a droplet forming unit disposed at an inner surface of the discharge pipe, Fig. 6 is a view showing an exemplary modification of the droplet forming unit of Fig. 5, Fig. 7 is a view showing another exemplary modification of the droplet forming unit of Fig. 5, and Figs. 8A through 8D are views showing sequential steps of an oil separating process by use of the oil separator of Fig. 4. Here, arrows represented in Figs. 4 and 5 denote a flow of an oil-contained refrigerant which has been introduced into the oil separator 25.

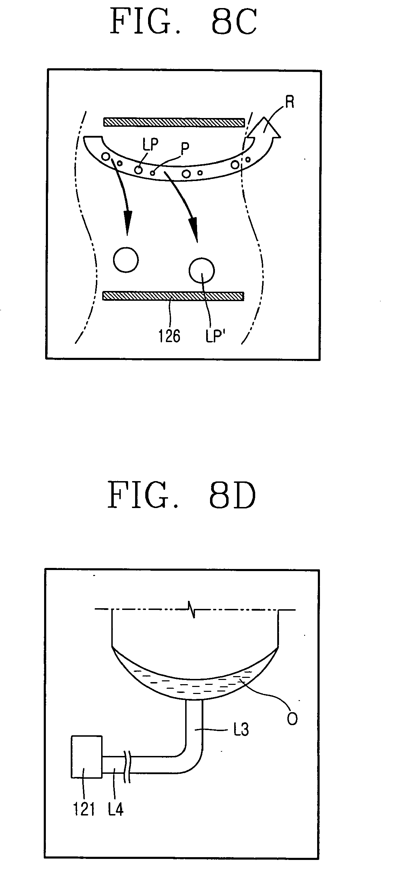

As shown in Fig. 4, an oil separator 125 includes an oil separating unit having an oil separating space in which oil is separated from an oil-contained refrigerant, a discharge pipe L1 of which one end is connected to a compressor 121 (refer to Fig. 8D) and the other end is connected to the oil separating unit so as to guide the oil-contained refrigerant discharged from the compressor 121 to the oil separating unit, and a droplet forming unit 127 disposed in the discharge pipe L1 to thus allow at least a part of oil particles contained in the refrigerant passing through the discharge pipe L1 to be introduced into the oil separating unit in a state of an oil droplet.

The oil separating unit uses a centrifugal force to separate the oil from the oil-contained refrigerant according to a weight difference between the oil and the refrigerant. For this, the oil separating unit includes a cylindrical shell 126 having an oil separating space, an upper cover 128 for covering an upper side of the shell 26, and a lower cover 129 for covering a lower side of the shell 126.

A circulation pipe L2 connected to a condenser (not shown) is penetratingly formed at the center portion of the upper cover 128, and an oil recollection pipe L3 connected to an oil suction pipe (not shown) is penetratingly formed at the center portion of the lower cover 129.

The upper and lower covers 128 and 129 may separately be fabricated, however, the two covers may also be fabricated to be integral with the shell 126 in a manner of molding, if necessary.

The discharge pipe L1 penetrates a side surface of the shell 126 in a horizontal direction (on the basis of a ground level), and an end of the discharge pipe L1 is curved toward an inner wall surface of the shell 126, whereby the oil-contained refrigerant introduced into the shell 126 can have a maximum rotation radius, resulting in applying a maximum centrifugal force to the refrigerant.

Referring to Fig. 5, the droplet forming unit 127 denotes a groove having certain depth and width, which includes a droplet forming groove 127a concaved at an inner surface of the discharge pipe L1. The droplet forming groove 127a can be used such that when a refrigerant containing oil in an aerosol state, the refrigerant being discharged from the compressor 121, passes through the discharge pipe L1, at least a part of the oil in the aerosol state is changed into an oil in a state of oil droplet by being contacted with the droplet forming groove 127a to thusly be introduced into the shell 126.

The droplet forming groove 127a is formed from an inlet of the discharge pipe L1 to an outlet thereof in a straight line shape along its length direction. Here, the droplet forming groove 127a is formed in plurality to be spaced apart by a certain interval (distance) along a circumferential direction of the discharge pipe L1.

As shown in Fig. 6, on the other side, in an exemplary modification of the droplet forming groove 127a, a droplet forming groove 127b may be formed from the inlet of the discharge pipe L1 to the output thereof in a straight line shape which is inclined by a certain angle with respect to its length direction.

Furthermore, as shown in Fig. 7, in another exemplary modification of the droplet forming groove 127a, a droplet forming groove 127c may be formed from the inlet of the discharge pipe L1 to the outlet thereof in a spiral shape along its length direction in such a manner of a rifling of an involucre. For forming the droplet forming groove 127c in the spiral shape, when the refrigerant is passed through the discharge pipe L1, oil droplets previously formed in the droplet forming groove 127c flow along the droplet forming groove 127c in the spiral shape to thereby become much greater oil droplets.

Thus, in the present invention, when the refrigerant containing the oil particles discharged from the compressor 121 flows into the shell 126 via the discharge pipe L1, at least a part of the oil particles in the aerosol state can be introduced into the shell 126 in the state of the oil droplet via the droplet forming unit 127 disposed in the discharge pipe L1. Accordingly, it is possible to ensure an oil separating performance without employing great size and height of the shell 126. At the same time, the time taken by separating the oil can be shortened to thus enable a preventing a situation of a lack of oil in the compressor 121 and of a degradation of reliability thereby.

On the other hand, the embodiments of the present invention having mentioned have been employed to explain the centrifugal oil separator 125 having the droplet forming unit 127. However, the present invention may also be applied to a typical oil separator employing an oil filter or the like.

Hereinafter, explanation will now be given for a process for separating oil from an oil-contained refrigerant using the oil separator 125 having such configuration with reference to Figs. 8A through 8D. For reference, arrows denote a movement direction of the oil-contained refrigerant.

As shown in Fig. 8A, when passing through the discharge pipe L1, oil P in an aerosol state contained in a refrigerant R discharged from the compressor 121 (refer to 8D) is in contact with the droplet forming groove 127a, 127b or 127c (refer to Figs. 5 through 7) which is formed at the inner surface of the discharge pipe L1.

As shown in Fig. 8B, while passing through the droplet forming groove 127a, 127b or 127c, the oil P in the aerosol state is partially massed together to thusly be changed into oil droplets LP. The thusly-formed oil droplets LP are introduced into the shell 126 together with the refrigerant R.

As shown in Fig. 8C, the oil droplets LP introduced into the shell 126 together with the refrigerant R flow in a state of being contacted with the inner wall surface of the shell 126 by the centrifugal force. Here, the primarily formed oil droplets LP via the droplet forming groove 127a, 127b or 127c collide with the oil P in the aerosol state which have not been changed into the state of the oil droplet LP, and accordingly much greater oil droplets LP' are secondarily formed.

As shown in Fig. 8D, the greater oil droplets LP' are massed together to become oil, to thereafter be introduced back into the compressor 121 via the oil recollection pipe L3 and the oil suction pipe L4.

As described above, the oil separator in accordance with the one embodiment of the present invention can be implemented such that when the oil-contained refrigerant is introduced into the oil separating unit via the discharge pipe, at least a part of oil in the aerosol state, the oil being contained in the refrigerant, can be changed into the state of the oil droplet by the droplet forming unit formed in the discharge pipe to thus be introduced into the oil separating unit. Accordingly, first, an oil separating performance of the oil separating unit can be improved by reducing a burden on separating the oil of the oil separating unit. Second, an oil separating time of the oil separating unit can be shortened. Third, the oil separating unit can be miniaturized. Fourth, an entire performance of the air conditioner can be improved by including the oil separator having the above mentioned characteristics.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. An oil separator comprising:
an oil separating unit having an oil separating space in which oil is separated from an oil-contained refrigerant;
a discharge pipe of which one end is connected to a compressor and the other end is connected to the oil separating unit so as to guide the oil-contained refrigerant discharged from the compressor to the oil separating unit; and
a droplet forming unit disposed in the discharge pipe to thus allow at least a part of oil particles contained in the refrigerant passing through the discharge pipe to be introduced into the oil separating unit in a state of an oil droplet.

2. The oil separator of claim 1, wherein the oil separating unit includes:
a cylindrical shell having the oil separating space;
an upper cover for covering an upper side of the shell, and through which a circulation pipe for introducing a refrigerant separated from oil into a condenser is formed; and
a lower cover for covering a lower side of the shell, and through which an oil recollection pipe for introducing the oil separated from the refrigerant into the compressor is formed,
wherein the discharge pipe horizontally penetrates a side surface of the shell, and an end of the discharge pipe is curved toward an inner wall of the shell.

3. The oil separator of claim 1 or 2, wherein the droplet forming unit is formed at an inner surface of the discharge pipe, and formed in plurality from an inlet of the discharge pipe to an outlet thereof along a length direction of the discharge pipe.

4. The oil separator of claim 1 or 2, wherein the droplet forming unit is formed at an inner surface of the discharge pipe, and is formed from an inlet of the discharge pipe to an outlet thereof to be inclined by a certain angle with respect to a length direction of the discharge pipe.

5. The oil separator of claim 1 or 2, wherein the droplet forming unit is formed at an inner surface of the discharge pipe, and is formed from an inlet of the discharge pipe to an outlet thereof to have a spiral shape along a length direction of the discharge pipe.

6. An air conditioner comprising:
an indoor unit having an evaporator;
an outdoor unit connected to the indoor unit via a refrigerant pipe and having a compressor and a condenser; and
an oil separator which includes an oil separating unit having an oil separating space in which oil is separated from an oil-contained refrigerant discharged from the compressor, a discharge pipe of which one end is connected to the compressor and the other end is connected to the oil separating unit so as to guide the oil-contained refrigerant discharged from the compressor to the oil separating unit, and a droplet forming unit disposed in the discharge pipe to thus allow at least a part of oil particles contained in the refrigerant passing through the discharge pipe to be introduced into the oil separating unit in a state of an oil droplet;
a circulation pipe for guiding the refrigerant separated from the oil-contained refrigerant in the oil separator to the condenser; and
an oil recollection pipe for guiding the oil separated from the oil-contained refrigerant in the oil separator to the compressor.

7. The air conditioner of claim 6, wherein the oil separating unit is an oil filter.

8. The air conditioner of claim 6 or 7, wherein the droplet forming unit is formed at an inner surface of the discharge pipe, and formed in plurality from an inlet of the discharge pipe to an outlet thereof along a length direction of the discharge pipe.

9. The air conditioner of claim 6 or 7, wherein the droplet forming unit is formed at an inner surface of the discharge pipe, and is formed from an inlet of the discharge pipe to an outlet thereof to be inclined by a certain angle with respect to a length direction of the discharge pipe.

10. The air conditioner of claim 6 or 7, wherein the droplet forming unit is formed at an inner surface of the discharge pipe, and is formed from the inlet of the discharge pipe to the outlet thereof to have a spiral shape along a length direction of the discharge pipe.

11. A method of operating an apparatus according to any of claims 1 to 10.
